# EUROPEAN PATENT APPLICATION

(11) **EP 4 712 289 A1**
(43) Date of publication of application: **18.03.2026**
(21) Application number: 25190901.6
(22) Date of filing: 22.07.2025
(51) Int. Cl.: H02J 3/32, H02J 7/00, B60L 53/63

(54) **INFORMATION PROCESSING APPARATUS AND INFORMATION PROCESSING METHOD**

(30) Priority: 13.09.2024 JP 2024159427
(71) Applicant: TOYOTA JIDOSHA KABUSHIKI KAISHA, Toyota-shi, Aichi-ken 471-8571 (JP)
(72) Inventor: ENDO, Yoshihiko, Nagoya-shi, Aichi-ken 451-6015 (JP)
(74) Representative: Cabinet Beau de Loménie

(57) **Abstract**

An information processing apparatus (20) includes a control unit (23) that, when connection of a charger (50) to an electricity storage body (10) has been detected, transmits predetermined information to first external equipment (30A) communicably connected to the charger (50) among one or more pieces of external equipment (30) operating in a supply area of electric power in which the electricity storage body (10) is located, after receiving charging based on the predetermined information from the charger (50), stores charging information during the charging received, the charging information being transmitted from the first external equipment (30A), and transmits request information created using the stored charging information to the first external equipment (30A) or second external equipment (30B) among the one or more pieces of external equipment.

## Description

### BACKGROUND OF THE INVENTION

### 1. Field of the Invention

The present disclosure relates to an information processing apparatus and an information processing method.

### 2. Description of Related Art

In related art, a technology of supplying electric power to an electricity storage body is known. For example, Japanese Unexamined Patent Application Publication No. 2022-048625 (JP 2022-048625 A) discloses a technology of accepting application of an absorption amount of excess electric power from a consumer who receives supply of electric power to an electricity storage body in accordance with an incentive point based on a predicted amount of excess electric power of a generator and on an absorption amount of excess electric power by energy storage equipment (electricity storage body), and determining an electric power distribution plan for each electricity storage body.

### SUMMARY OF THE INVENTION

However, according to JP 2022-048625 A, the consumer needs to apply every time and set a purchase condition in advance. Thus, there is room for improvement in the technology of supplying electric power to an electricity storage body.

An object of the present disclosure made in view of such circumstances is to improve a technology of supplying electric power to an electricity storage body.

An information processing apparatus according to an aspect of the present disclosure is an information processing apparatus mounted on an electricity storage body. The information processing apparatus includes a control unit that, when connection of a charger to the electricity storage body has been detected, acquires position information of the electricity storage body measured by a GPS sensor mounted on the electricity storage body, specifies a supply area of electric power in which the electricity storage body is located based on the acquired position information, transmits predetermined information to first external equipment communicably connected to the charger among one or more pieces of external equipment operating in the specified supply area, after receiving charging based on the predetermined information from the charger, stores charging information during the charging received, the charging information being transmitted from the first external equipment, and transmits request information created using the stored charging information to the first external equipment or second external equipment among the one or more pieces of external equipment.

An information processing apparatus according to an aspect of the present disclosure is an information processing apparatus mounted on an electricity storage body. The information processing apparatus includes a control unit that, when connection of a charger to the electricity storage body has been detected, transmits predetermined information to first external equipment communicably connected to the charger among one or more pieces of external equipment operating in a supply area of electric power in which the electricity storage body is located, after receiving charging based on the predetermined information from the charger, stores charging information during the charging received, the charging information being transmitted from the first external equipment, and transmits request information created using the stored charging information to the first external equipment or second external equipment among the one or more pieces of external equipment.

An information processing method according to an aspect of the present disclosure is an information processing method to be executed by an information processing apparatus mounted on an electricity storage body. The information processing method includes: when connection of a charger to the electricity storage body has been detected, transmitting predetermined information to first external equipment communicably connected to the charger among one or more pieces of external equipment operating in a supply area of electric power in which the electricity storage body is located; after receiving charging based on the predetermined information from the charger, storing charging information during the charging received, the charging information being transmitted from the first external equipment; creating request information using the stored charging information; and transmitting the created request information to the first external equipment or second external equipment among the one or more pieces of external equipment.

According to an aspect of the present disclosure, a technology of supplying electric power to an electricity storage body is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram illustrating a schematic configuration example of a system according to an embodiment of the present disclosure; and
FIG. 2 is a flowchart indicating operation of an information processing apparatus.

### DETAILED DESCRIPTION OF EMBODIMENTS

An embodiment of the present disclosure will be described below.

### Outline of Embodiment

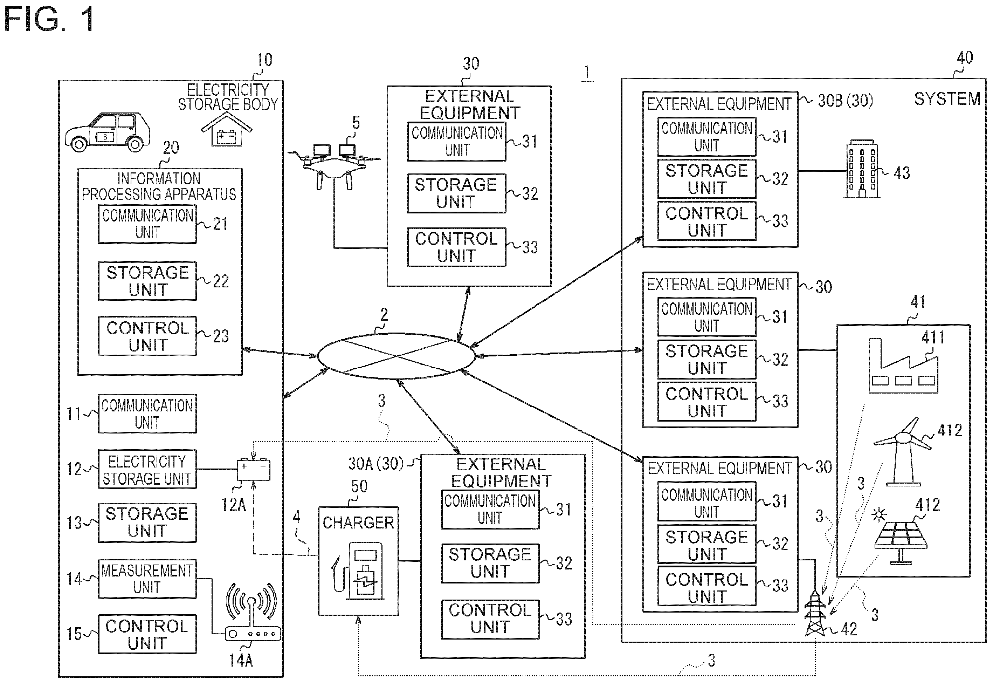

Outline of a system 1 according to the embodiment of the present disclosure will be described with reference to FIG. 1. The system 1 includes an electricity storage body 10, an information processing apparatus 20, one or more pieces of external equipment 30, a system 40, and a charger 50. The electricity storage body 10, the information processing apparatus 20 and the one or more pieces of external equipment 30 are communicably connected to a network 2 including, for example, the Internet, a mobile communication network, and the like. Electric power produced by an electric power producer 41 within the system 40 is supplied to the electricity storage body 10 and the charger 50 through an electric line 3 via an electric power transmission and distribution operator 42. The charger 50 and the electricity storage body 10 are connected through a charging cable 4.

The electricity storage body 10 is, for example, a chargeable vehicle such as a battery electric vehicle (BEV) and a plug-in hybrid electric vehicle (PHEV), or a storage battery provided at home, in a company, a public facility, or the like, but is not limited to these.

The information processing apparatus 20 is a computer mounted on the electricity storage body 10. The information processing apparatus 20 can communicate with the electricity storage body 10 and the one or more pieces of external equipment 30 via the network 2.

The one or more pieces of external equipment 30 are computers operated by one or more operators that operate electric power supply business in a supply area of electric power in which the electricity storage body 10 is located. Each of the one or more pieces of external equipment 30 can communicate with the information processing apparatus 20 and external equipment 30 other than itself via the network 2. In the present disclosure, the one or more pieces of external equipment 30 include (i) first external equipment 30A communicably connected to the charger 50 connected to the electricity storage body 10, and (ii) second external equipment 30B operated by a retail electricity provider 43 that supplies electric power to the charger 50 (charging provider).

The system 40 indicates the whole facility that performs production to supply of electric power. An operator that operates the system 40 is classified into (i) an electric power generation department (hereinafter, referred to as the electric power producer 41) that operates an electric power generation facility (power station), (ii) an electric power transmission and distribution department (hereinafter, referred to as the electric power transmission and distribution operator 42) that operates an electric power transmission and distribution facility and supplies electric power to a consumer, and (iii) a retail department (hereinafter, included in the retail electricity provider 43) which performs setting of price menu and various kinds of procedure and which can be said as a contact with the consumer.

The charger 50 is a normal charger or a rapid charger provided at a charging spot of a BEV and a PHEV. The charger 50 is communicably connected to the first external equipment 30A.

### Configuration of Electricity Storage Body

As illustrated in FIG. 1, the electricity storage body 10 includes a communication unit 11, an electricity storage unit 12, a storage unit 13, a measurement unit 14, and a control unit 15.

The communication unit 11 includes one or more communication interfaces to be connected to the network 2. The communication interface supports mobile communication standards such as, for example, 4th generation (4G) and 5th generation (5G), but the mobile communication standards supported by the communication interface are not limited to these. In the present embodiment, the electricity storage body 10 communicates with the information processing apparatus 20 via the communication unit 11 and the network 2.

The electricity storage unit 12 includes, but not limited to, for example, a storage battery 12A mounted on a chargeable vehicle such as a BEV and a PHEV or a storage battery 12A provided at home, in a company, a public facility, or the like,

The measurement unit 14 includes, for example, a GPS sensor 14A that receives a radio wave from a GPS satellite and measures position information of a point at which the electricity storage body 10 is located, but the measurement unit 14 may include a sensor that supports an arbitrary satellite positioning system as well as the GPS sensor.

The control unit 15 includes one or more processors, one or more programmable circuits, one or more dedicated circuits, or a combination thereof. The control unit 23 controls the whole operation of the electricity storage body 10.

### Configuration of Information Processing Apparatus

As illustrated in FIG. 1, the information processing apparatus 20 includes a communication unit 21, a storage unit 22, and a control unit 23.

The communication unit 21 includes one or more communication interfaces to be connected to the network 2. The communication interface supports, for example, mobile communication standards, wired local area network (LAN) standards or wireless LAN standards, but the communication standards supported by the communication interface are not limited to these, and the communication interface may support arbitrary communication standards. The information processing apparatus 20 communicates with the electricity storage body 10 and the one or more pieces of external equipment 30 via the communication unit 21 and the network 2.

The storage unit 22 includes one or more memories. Each memory included in the storage unit 22 may function as, for example, a main storage device, an auxiliary storage device or a cache memory. The storage unit 22 stores arbitrary information to be used for operation of the information processing apparatus 20. For example, the storage unit 22 may store a system program, an application program, a database, a list of IP addresses of the external equipment 30 respectively operated by one or more operators in each supply area of electric power, a chargeable capacity of the storage battery 12A, a desired charging condition, a charge amount of electric power derived from renewable energy in a total charge amount of electric power charged to the storage battery 12A during a predetermined period, a configuration of power supplies of the total charge amount, a configuration of power supplies of the system 40, and the like.

The control unit 23 includes one or more processors, one or more programmable circuits, one or more dedicated circuits, or a combination thereof. The control unit 23 controls the whole operation of the information processing apparatus 20.

### Configuration of External Equipment

As illustrated in FIG. 1, the external equipment 30 includes a communication unit 31, a storage unit 32, and a control unit 33.

The communication unit 31 includes one or more communication interfaces to be connected to the network 2. The communication interface supports, for example, mobile communication standards, wired LAN standards, or wireless LAN standards, but the communication interface may support arbitrary communication standards. The external equipment 30 communicates with the information processing apparatus 20 and the external equipment 30 other than itself via the communication unit 31 and the network 2.

### Configuration of System

As illustrated in FIG. 1, the system 40 is operated by the electric power producer 41, the electric power transmission and distribution operator 42, and the retail electricity provider 43.

The electric power producer 41 operates an electric power generation facility 411 utilizing fossil fuel, and an electric power generation facility 412 utilizing renewable energy. The electric power generation facility 411 utilizing fossil fuel is, for example, a power station that performs thermal power generation using fossil fuel such as petroleum, coal and natural gas. The electric power generation facility 412 utilizing renewable energy is an electric power generation facility that performs green power generation using sunlight, wind power, water power, geothermal heat, biomass, wave power, tidal power, or the like.

The electric power transmission and distribution operator 42 operates an electric power facility such as the electric line 3, an electric power substation, and a distribution line. The electric power transmission and distribution operator 42 supplies electric power generated by the electric power producer 41 to the electricity storage body 10, the charger 50, and the like.

It is assumed in the present disclosure that the retail electricity provider 43 is an operator that retails electric power to a consumer by utilizing the electric line 3 of the electric power transmission and distribution operator 42 and includes a retail department of the system 40.

### Configuration of Charging Facility

In the present disclosure, the charger 50 is communicably connected to the first external equipment 30A. The charger 50 charges the electricity storage body 10 with electric power supplied from the retail electricity provider 43.

### Operation Flow of Information Processing Apparatus

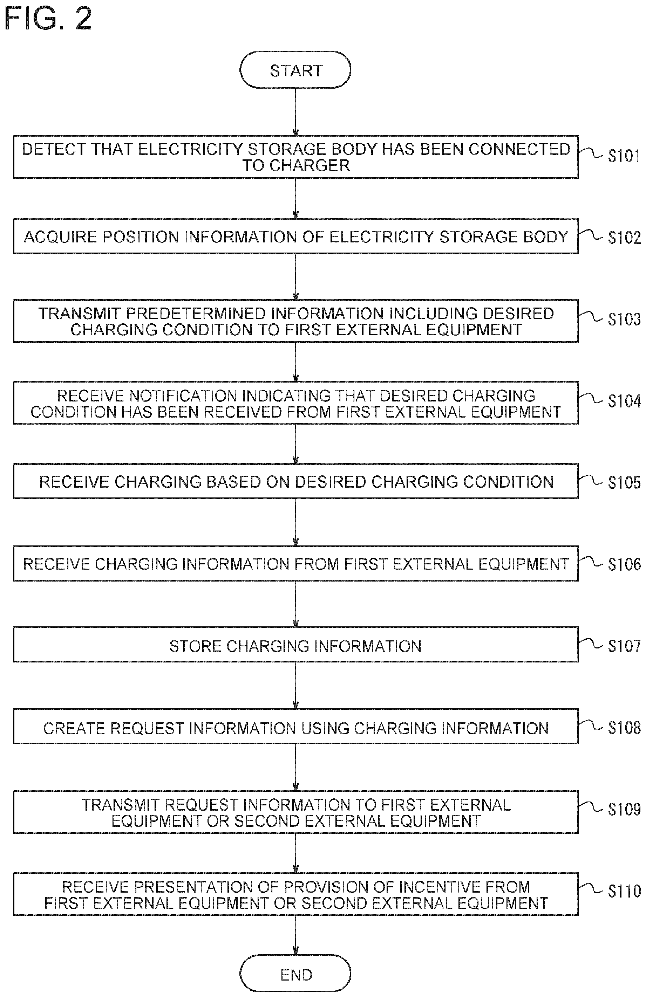

Operation of the information processing apparatus 20 according to the present embodiment will be described with reference to FIG. 2.

S101: The control unit 23 detects that the charger 50 has been connected to the electricity storage body 10.

The control unit 15 of the electricity storage body 10 notifies the control unit 23 via the network 2 that the charger 50 has been connected to a charging port for charging the storage battery 12A.

S102: The control unit 23 acquires position information of the electricity storage body 10.

The control unit 15 of the electricity storage body 10 transmits the position information of the electricity storage body 10 measured by the GPS sensor 14A mounted on the electricity storage body 10 to the control unit 23 via the network 2.

S103: The control unit 23 transmits predetermined information to the first external equipment 30A communicably connected to the charger 50 among the one or more pieces of external equipment 30 operating in a supply area P of electric power in which the electricity storage body 10 is located.

In the present disclosure, the one or more pieces of external equipment 30 are computers respectively operated by one or more operators that operate electric power supply business in the supply area P of electric power. It is assumed that the one or more operators are (i) an aggregator 5 that is an intermediary that keeps balance of supply and demand of electric power, (ii) the electric power producer 41, the electric power transmission and distribution operator 42 and the retail electricity provider 43 that are operators operating the system 40, and (iii) the charging provider that provides a charging service using the charger 50 in the supply area P, but are not limited to these.

First, the control unit 23 specifies the supply area P in which the electricity storage body 10 is located based on the position information measured by the GPS sensor 14A. Then, the control unit 23 searches a list of IP addresses of the external equipment 30 respectively operated by the one or more operators that operate business in the supply area P, the list being stored in the storage unit 22. Then, the control unit 23 transmits predetermined information to the IP address of the first external equipment 30A that has been searched for.

The predetermined information is a chargeable capacity of the storage battery 12A provided in the electricity storage body 10, the position information of the electricity storage body 10, a connection state of the electricity storage body 10 and the charger 50, and a desired charging condition. The control unit 23 reads the chargeable capacity and the desired charging condition of the storage battery 12A stored in the storage unit 22 and transmits the chargeable capacity and the desired charging condition along with the position information of the electricity storage body 10 measured by the GPS sensor 14A and information on the connection state of the electricity storage body 10 and the charger 50 to the first external equipment 30A.

The desired charging condition is one or more out of desired time period of charging, a desired origin of electric power to be charged, a desired charge amount, a desired charging rate of the storage battery 12A, desired charging unit price, and a desired charging fee. An origin of electric power to be charged is whether electric power to be charged is derived from fossil fuel or from renewable energy. The charging rate of the storage battery 12A is a rate of a charge amount with respect to a full charging capacity of a rating of the storage battery 12A provided in the electricity storage body 10.

S104: The control unit 23 receives a notification indicating that the desired charging condition included in the predetermined information has been received from the first external equipment 30A.

S105: The electricity storage body 10 receives charging X based on the predetermined information from the charger 50.

S106: The control unit 23 receives charging information when the charging X has been received, the charging information being transmitted from the first external equipment 30A.

S107: The control unit 23 stores the charging information when the charging X has been received in the storage unit 22.

The charging information is information on an amount of electric power derived from renewable energy supplied when the charging X has been received, a configuration of power supplies, and the like. The configuration of the power supplies is information that specifies a ratio of an amount of electric power (electric power generation amount) derived from renewable energy and an amount of electric power (electric power generation amount) derived from fossil fuel, produced in the system 40.

S108: The control unit 23 creates request information using the charging information stored in the storage unit 22.

The request information is one or more out of (i) a ratio of a charge amount of electric power derived from renewable energy in a total charge amount charged to the electricity storage body 10 during a predetermined period, (ii) a ratio of a charge amount of energy derived from fossil fuel in the total charge amount charged to the electricity storage body 10 during the predetermined period, (iii) a charge amount of electric power derived from renewable energy charged to the electricity storage body 10 during the predetermined period, (iv) a configuration of power supplies of the total charge amount, (v) a charge amount of electric power derived from renewable energy among the charge amount when the charging X has been received, and (vi) a configuration of power supplies of the charge amount when the charging X has been received. The predetermined period is, for example, set at one month before the request information is created, but is not limited to this. The configuration of the power supplies is a ratio of the charge amount of electric power derived from renewable energy and the charge amount of electric power derived from fossil fuel.

The control unit 23 reads (i) the charge amount of electric power derived from renewable energy among the total charge amount during the predetermined period, and (ii) the configuration of power supplies of the total charge amount, stored in the storage unit 22.

S109: The control unit 23 transmits the created request information to the first external equipment 30A or the second external equipment 30B among the one or more pieces of external equipment 30.

The first external equipment 30A is external equipment 30 that is communicably connected to the charger 50 and operated by the charging provider. In contrast, the second external equipment 30B is external equipment 30 other than the first external equipment 30A among the one or more pieces of external equipment 30. It is assumed in the present disclosure that the second external equipment 30B is external equipment 30 operated by the retail electricity provider 43 that supplies electric power to the charger 50 (charging provider), for example, as illustrated in FIG. 1. However, the second external equipment 30B may be external equipment 30 operated by the aggregator 5, the electric power producer 41 or the electric power transmission and distribution operator 42.

In the example illustrated in FIG. 1, the external equipment 30 communicably connected to the charger 50 is set as the first external equipment 30A. Further, the external equipment 30 operated by the retail electricity provider 43 that supplies electric power to the charger 50 through the electric line 3 is set as the second external equipment 30B.

S110: The control unit 23 receives from the first external equipment 30A or the second external equipment 30B, presentation of one or more of a discount amount from the charging fee of the charging X, a discount amount from a monthly amount of payment for electric power, and provision of an incentive point, in accordance with a charge amount of electric power derived from renewable energy among the charge amount charged to the electricity storage body 10.

The request information is information regarding an accepted amount of renewable energy, transmitted to the external equipment 30 operated by the electric power supply operator to "request" an incentive. The first external equipment 30A or the second external equipment 30B receives the request information and determines an incentive to be distributed to the electricity storage body 10. A discount corresponding to an incentive from the charging fee of the charging X or an incentive based on the request information is provided to the electricity storage body 10.

In this manner, the consumer having the electricity storage body 10 completes charging based on predetermined information and receives provision of the incentive in accordance with an amount of use of electric power derived from renewable energy only by connecting the electricity storage body 10 to the charger 50. On the other hand, the electric power supply operator can reduce electric power loss by allotting excess electric power to the chargeable electricity storage body 10.

As described above, the information processing apparatus 20 according to the present embodiment transmits predetermined information to the first external equipment 30A communicably connected to the charger 50 among the one or more pieces of external equipment 30 operating in a supply area of electric power in which the electricity storage body 10 is located when connection of the charger 50 to the electricity storage body 10 has been detected, after receiving charging based on the predetermined information from the charger 50, stores charging information during the charging received, the charging information being transmitted from the first external equipment 30A, and transmits request information created using the stored charging information to the first external equipment 30A or the second external equipment 30B among the one or more pieces of external equipment 30. According to such a configuration, when the electricity storage body 10 is connected to the charger 50, the information processing apparatus 20 starts transmission/reception to/from the external equipment 30 and creates the request information using the received charging information. This eliminates the need for the consumer having the electricity storage body 10 to create the request information in advance. Thus, a technology of supplying electric power to the electricity storage body is improved in a point that trouble of creating request information is reduced.

While the present disclosure has been described based on various drawings and examples, it should be noted that a person skilled in the art may make various modifications and improvements based on the present disclosure. It should be therefore noted that these modifications and improvements are included in the scope of the present disclosure. For example, the respective components and functions included in the respective steps can be rearranged without causing logical inconsistencies, and a plurality of components or steps can be combined to be one component or step, or can be divided.

Further, for example, an embodiment is also possible in which a general-purpose computer is caused to function as the information processing apparatus 20 according to the embodiment described above. Specifically, a program describing processing content that implements respective functions of the information processing apparatus 20 according to the embodiment described above is stored in a memory of the general-purpose computer, and the program is read and executed by a processor. Thus, the present disclosure can be implemented as a program executable by the processor or a non-transitory computer-readable medium storing the program.

## Claims

1. An information processing apparatus (20) to be mounted on an electricity storage body (10), the information processing apparatus (20) comprising a control unit (23) configured to, when connection of a charger (50) to the electricity storage body (10) has been detected, acquire position information of the electricity storage body (10) measured by a GPS sensor (14A) mounted on the electricity storage body (10), specify a supply area of electric power in which the electricity storage body (10) is located based on the acquired position information, transmit predetermined information to first external equipment (30A) communicably connected to the charger (50) among one or more pieces of external equipment (30) operating in the specified supply area, after receiving charging based on the predetermined information from the charger (50), store charging information during the charging received, the charging information being transmitted from the first external equipment (30A), and transmit request information created using the stored charging information to the first external equipment (30A) or second external equipment (30B) among the one or more pieces of external equipment (30).

2. An information processing apparatus (20) to be mounted on an electricity storage body (10), the information processing apparatus (20) comprising a control unit (23) configured to, when connection of a charger (50) to the electricity storage body (10) has been detected, transmit predetermined information to first external equipment (30A) communicably connected to the charger (50) among one or more pieces of external equipment (30) operating in a supply area of electric power in which the electricity storage body (10) is located, after receiving charging based on the predetermined information from the charger (50), store charging information during the charging received, the charging information being transmitted from the first external equipment (30A), and transmit request information created using the stored charging information to the first external equipment (30A) or second external equipment (30B) among the one or more pieces of external equipment (30).

3. The information processing apparatus according to claim 2, wherein:
the predetermined information is a chargeable capacity of a storage battery (12A) provided in the electricity storage body (10), position information of the electricity storage body (10), a connection state of the electricity storage body (10) and the charger (50), and a desired charging condition; and
the desired charging condition is one or more out of desired time period of charging, a desired origin of electric power to be charged, a desired charge amount, a desired charging rate of the storage battery (12A), desired charging unit price, and a desired charging fee.

4. The information processing apparatus according to claim 2 or 3, wherein the request information is one or more out of a ratio of a charge amount of electric power derived from renewable energy in a total charge amount charged to the electricity storage body (10) during a predetermined period, a ratio of a charge amount of energy derived from fossil fuel in the total charge amount charged to the electricity storage body during the predetermined period, a charge amount of electric power derived from renewable energy charged to the electricity storage body (10) during the predetermined period, a configuration of power supplies of the total charge amount, a charge amount of electric power derived from renewable energy among a charge amount during the charging received, and a configuration of power supplies of a charge amount during the charging received.

5. The information processing apparatus according to claim 4, wherein the control unit (23) is configured to receive from the first external equipment (30A) or the second external equipment (30B), presentation of one or more out of a discount amount from a charging fee, a discount amount from a monthly amount of payment, and provision of an incentive point, in accordance with the charge amount of electric power derived from the renewable energy among the charge amount charged to the electricity storage body (10).

6. An information processing method to be executed by an information processing apparatus (20) mounted on an electricity storage body (10), the information processing method comprising:
when connection of a charger (50) to the electricity storage body (10) has been detected, transmitting predetermined information to first external equipment (30A) communicably connected to the charger (50) among one or more pieces of external equipment (30) operating in a supply area of electric power in which the electricity storage body (10) is located;
after receiving charging based on the predetermined information from the charger (50), storing charging information during the charging received, the charging information being transmitted from the first external equipment (30A);
creating request information using the stored charging information; and
transmitting the created request information to the first external equipment (30A) or second external equipment (30B) among the one or more pieces of external equipment (30).
